(19) Europäisches Patentamt / European Patent Office / Office européen des brevets

(11) **EP 1 513 609 B1**

(12) **EUROPEAN PATENT SPECIFICATION**

(45) Date of publication and mention
of the grant of the patent:
**06.01.2010 Bulletin 2010/01**

(21) Application number: **03757178.3**

(22) Date of filing: **03.06.2003**

(51) Int Cl.:
**B01J 8/18** *(2006.01)*        **B01J 8/24** *(2006.01)*
**B01J 8/38** *(2006.01)*        **B01J 8/32** *(2006.01)*
**B01J 2/16** *(2006.01)*        **F26B 3/08** *(2006.01)*

(86) International application number:
**PCT/IL2003/000468**

(87) International publication number:
**WO 2003/103825 (18.12.2003 Gazette 2003/51)**

(54) **FLUIDIZED BED PROCESS AND APPARATUS**

WIRBELBETTVERFAHREN UND -VORRICHTUNG

PROCEDE SUR LIT FLUIDISE ET APPAREIL A CET EFFET

(84) Designated Contracting States:
**AT BE BG CH CY CZ DE DK EE ES FI FR GB GR
HU IE IT LI LU MC NL PT RO SE SI SK TR**

(30) Priority: **05.06.2002 IL 15005202**

(43) Date of publication of application:
**16.03.2005 Bulletin 2005/11**

(73) Proprietor: **Particle Treatment Technologies Ltd.
86800 Arava (IL)**

(72) Inventor: **MARYAKHIN, Roman
89056 Arad (IL)**

(74) Representative: **Sevinç, Erkan
Istanbul Patent & Trademark Consultancy Ltd.
Plaza-33, Büyükdere cad. No: 33/16
Sisli
34381 Istanbul (TR)**

(56) References cited:
WO-A-01/36082        DE-U- 1 884 281
GB-A- 1 158 928        US-A- 3 551 513
US-A- 3 662 474        US-A- 4 235 024
US-A- 4 949 735

• MARKOWSKI A S: "QUALITY INTERACTION IN A
JET SPOUTED BED DRYER FOR BIO-
PRODUCTS" DRYING TECHNOLOGY, MARCEL
DEKKER, NEW YORK, US, vol. 11, no. 2, 1993,
pages 369-387, XP000343953 ISSN: 0737-3937

**Description**

FIELD OF THE INVENTION

The present invention relates generally to the field of fluid bed processors used in various industries for drying, coating, agglomerating, and performing other specific processes on particle materials. More specifically, the present invention relates to a device especially useful for processing particles, utilizing a hydro dynamically active layer (HDAL) produced by introducing a high speed gas jet through said particulate material under controlled conditions. The device of the present invention may be implemented in a plurality of different fluid bed applications and results in much more efficient particle processing, and a significant savings in energy consumption. The present invention relates also to a method to processing the same.

BACKGROUND OF THE INVENTION

Fluid bed technology is used in many different applications and industries for the purpose of processing particulate materials. Among the industries where fluid bed technology is regularly used or has the potential for being used is: foodstuffs and dairy products (additives, health food extracts, soup mixes, baby foods, carbohydrate processing, coffee, and dairy products), chemicals (fertilizer, inorganic salts, organic chemicals, pesticides, polymers, ceramics, detergents, paints), pharmaceuticals (proteins, vitamins, yeast, antibiotics, drugs).

A fluidized bed is a bed of solid particles with a stream of air or gas passing upward through the particles at a rate great enough to set them in motion. As the air travels through the bed, it imparts unique properties to the bed. The bed behaves like a liquid, so as to allow for processes such as agglomeration, coating, and drying, to be carried out efficiently. Depending on the type of application, different types of fluid beds can be produced. In conventional fluid bed systems, when the product is fluidized by a gas, the frictional force between the gas and the particles counterbalances the weight of the particles. A pressure drop is produced across the bed that is proportional to the weight of the bed. When the pressure drop is equal to the gravitational force acting on the particles, the bed is just fluidized and the gas velocity is at the fluidization velocity. The quantity of air required achieving minimum fluidization changes as the product's particle size or density changes.

Many types of fluid bed processors exist in the art, and each is directed towards a specific application or towards solving a specific problem inherent in fluid bed processing, of which there are many. Reference is thus made to U.S. 4,272,895 entitled "Product Reclamation in a Fluid Bed Dryer", U.S. 6,189,234 entitled, "Continuous Flow Fluid Bed Dryer", U.S. 4,492,040 entitled, "Method and Apparatus for Drying a Pulverulent or Particulate Product", and U.S. 5,459,318 entitled, "Automated Fluid Bed Process," among others.

Chief among the problems which these and other patented technologies have attempted to solve is the escape of particles from the fluid layer, the narrow gas velocity range required for achieving fluidization, and the low relative velocities between interacting phases. Especially in drying procedures, the energy and time needed to overcome the diffusion gradient in order to remove moisture remaining at the end of the process is extremely high, and while the first stage of the drying process may be considered energy-efficient, this stage is certainly not. Maintaining the wet material in the fluidized state during this final stage requires a large amount of heat energy, which is otherwise lost. Fluid bed dryers require a constant high flow rate in order to accomplish drying.

It is impossible to improve mass transfer by raising the relative velocities of the interacting phases, since increasing the gas velocity will result in the disappearance of the fluidized layer. Another problem occurs when processing particles that have a tendency to stick together. For example, amino acids containing 20-30% of water do not feature looseness. The material becomes loose and appropriate for fluidized bed processing only after reducing the humidity level by special means.

None of the currently available technologies satisfactorily solves all of the aforementioned problems: thus, it is almost impossible to intensify heat and mass transfer by increasing the relative velocities of interacting phases; high losses of materials are underlined with the apparatus' wastes gas flow when processing polydispersed material; the available technologies usually required the utilization of special mechanical agitators in order to bring the materials into a loose state suitable for fluidized bed processing; and lastly, the impossibility to reduce heat carrier consumption at the decreasing rate phase of the drying process, which results in the over-consumption of energy. The highly specific conditions required for carrying out various processes using fluidized beds, and the plethora of problems that arise which each advance in technology has provided the inventor of the present invention with the initiative to seek an entirely new approach to fluid bed processing.

SUMMARY OF THE INVENTION

It is therefore one object of the present invention to present a fluid bed processor device, especially useful for processing particulate material, at a reactively high mass and heat exchange efficiency. Hence, according one embodiment said device comprising three components as follows: An inlet chamber, having an opening in which process gas is forced to intrude at a predetermined velocity. A nozzle grid, comprises a plurality of free passageways, each of which is having a predetermined groove cut from which said process gas stream is forced to extrude from the side of the inlet chamber to the side of a processing chamber. The velocity of said gas is in the range of 20 m/s to 350 m/s. Lastly the processing chamber which accommodating the particulate material to be processed. Said chamber is adapted to provide an outlet for said process gas intruding from the said nozzle grid, enabling both reduce pressure zones and zones of relatively higher pressure to be steadily formed. It is acknowledged that the aforementioned fluidized bed processors is characterized in that a hydro dynamically active layer (HDAL) is formed in said processing chamber, wherein said particulate material is having a constant circulatory movement stipulated by the circulatory of said process gas.

It is in the scope of the present inevntion wherein the above defined fluidized bed processor comprising the said HDAL, which provides intense circulatory motion caused by the gas flow in a relatively large range of velocities, so the overall ascending gas flow is below the hovering velocity of the said particulate material, without the escape of said particles from the HDAL and with the ability to treat highly polydisperse materials.

In particularly, it is in the scope of the present invention wherein the above defined fluid bed processor is adapted to process pastas and any other adhesive materials, characterized by a processing chamber having inert granules made of polymers or any other suitable organic composition, inorganic materials or any mixture thereof. The average circumference diameter of said support granules is wider then the particles of said material to be processed. The mechanism of the granules action is so that whereas wet material is coating each of said granules so only dried and processed material is able to leave the processing chamber and whereas said granules are recycled so they are not leaving the processing chamber.

According to one particular embodiment of the present invention, said fluid bed processor is having a nozzle grid, comprises 370 - 3200 nozzles per square meter, and additionally or alternatively, each nozzle has a groove cut having diameter in the range of 0.7 to 3.5 mm at the side facing the said processing chamber. Moreover, it is specifically in the scope of the present invention wherein the gas jet outflow velocity at each nozzle is at least 100 m/s.

It is another object of the present invention to provide a material produced by the fluid bed processor as defined above. More specifically, the present invention relates to materials hereto defined, selected from foodstuffs, chemicals, pharmaceuticals or any particulate material to be dried, processed, reacted, coated, fractionated, separated or milled.

It is in the scope of the present invention to present the fluid bed processor as defined above, wherein particles to be processed are in heterogeneous mixture with inert particles in the processing chamber. Preferably, said inert particles are polymeric granules of 2 to 4 mm-external diameters. Said processor is preferably comprising at least one net, having means to separate between inert particles and particles to be processed. The respectively humid particles to be processed are possible to be in heterogeneous mixture with inert particles. It is further acknowledged in this respect that the ratio between the external diameter of the humid particles to be processed and the external diameter of the inert particles is in the range of 1000:1 1 to 1:1000.

It is a last object of the present invention to provide a useful method for processing a particulate material by the fluidized bed processor as defined above; comprising introducing said particulate material into a processing chamber and passing a high-speed jet gas through a plurality of nozzles located in the base of said processing chamber, thereby producing distinct regions of low pressure so as to create an intense, substantially circulatory pattern of gas circulation into which said particulate material is picked up.

According to one embodiment of the present invention, the method is in particularly useful for processing a particulate material in a heterogeneous mixture by the fluidized bed processor. Said method is as defined above, additionally comprising at least one of the steps of (i) processing the said particulate material with inert material; (ii) passing the particulate material to be processed throughout a net, so the inert material is not passing said net; and/or (iii) purging the particulate material after it was processed throughout at least one outlet orifice.

In particularly, said method is especially useful according to the present invention to use in drying a particulate material, mixing at least two immiscible materials, in producing an aerosol, and in coating a particulate material, especially wherein the particulate material contains at least one amino acid.

BRIEF DESCRIPTION OF THE INVENTION

In order to understand the invention and to see how it may be carried out in practice, a preferred embodiment will now be described, by way of non-limiting example only, with reference to the accompanying drawings, in which:

Figure 1    presents zones of reduced pressure in a fluidized bed processor according to one preferred embodiment, wherein the circulate flow of the process gas enabled the formation of satiable HDAL defined in the present invention;

Figure 2    presents a side view (cross section) of a fluidized bed processor according to another preferred embodiment of the present invention, especially adapted to process particulate material coated as a thin layer on a plurality of granules;

Figure 3    presents a side view (cross section) of the HDAL comprising a heterogeneous mixture of particulate matter to be processed and inert material.

Figure 4    presents a side view (cross section) of the HDAL as defined above, wherein the heterogeneous mixture is located in an initial working zone, well defined by means of a net.

Figure 5A   presents a side view (cross section) of the HDAL as defined above; wherein the said HDAL has a circular initial working zone in the interior space of the HDAL. Figure 5B presents a top view of the same.

Figure 6    presents a circular version of the apparatus in a top view with radial movement of the material to be dried; and

Figure 7    presents a fluidized bed processor according to another preferred embodiment of the present invention, especially adapted to a continuous processing.

## DETAILED DESCRIPTION OF THE DRAWINGS

The following description is provided, along all chapters of the present invention, so as to enable any person skilled in the art to make use of said invention and sets forth the best modes contemplated by the inventor of carrying out this invention. Various modifications, however, will remain apparent to those skilled in the art, since the generic principles of the present invention have been defined specifically a fluidized bed processor useful for processing a particulate material.

Said device is based on the novel and non-obvious application of an otherwise well-known principle to traditional fluid bed processors. The modification of current fluid bed processors and the development of new ones using the method of the present invention provides for the formation of a hydro dynamically active layer, refereeing in the present invention in the term HDAL, produced when a high-speed gas jet is passed through a particulate material in the chamber of a fluid bed processor, in particular predetermined conditions hereto defined.

In said HDAL layer, particles are picked up by high-speed gas jets in order to form a highly intense, but controlled and organized flow through the process chamber of the device. The HDAL is entirely different in nature and behavior from those fluidized layers produced in current fluid bed processors, leads to more efficient processing, and reduced energy requirements, among other advantages.

It is well acknowledged in the present invention that HDAL represents a system resulting from the interaction of loose material having high speed discrete gas jets flowing from nozzles, under condition that speed of a total gas flow leaving the bed does not exceed the speed of fluidization of particles composing the layer. The gas jet outflow speed usually varies from 20 m/s to sonic and transonic speeds.

More specifically, the present invention relates to a device useful for processing a particulate material comprising introducing said particulate material into a processing chamber and passing a high-speed jet gas through a plurality of nozzles located in the base of said processing chamber, thereby producing distinct regions of low pressure so as to create an intense, substantially circulatory pattern of gas motion into which said particulate material is picked up, so as to become "fluidized" in a highly stable "hydro dynamically active layer.

The HDAL phenomena results from the interaction between a plurality of high-speed gas jets interacting with a solid disperse phase of particulate material. Gas jet outflow can be described by the Bernoulli equation:

$$H= P/\gamma + V^2/2g + h_l \qquad (1)$$

wherein H is the overall hydraulic pressure head, P is the gas pressure, $\gamma$ is the gas density, V is the gas velocity, g is the gravitational acceleration, $h_l$ is the loss of head, $P/\gamma$ is the static head characterizing the potential energy of gas, $V^2/2g$ is the dynamic head characterizing the kinetic energy of the gas.
In the absence of loss, $h_l= 0$, and

$$H= P/\gamma + V^2/2g \qquad (2)$$

Assuming that all potential energy at the outflow of the nozzles is transformed into kinetic energy,

$$V= (2gP/\gamma)^{1/2} \qquad (3)$$

Gas flow (Q) per unit time is:

$$Q = f \cdot V \qquad (4)$$

wherein f is the cross sectional area of the orifice.

In actuality, the amount of discharged gas is less than that calculated from equation (4) because of gas compression at the orifice, and the real gas friction against the orifice.

The ration of the jet cross-section area $f_s$ to the orifice cross-section $f$ characterizing the degree of gas compression is called the jet compression coefficient $E$:

$$\varepsilon = f_s / f \qquad (5)$$

The effect of the real gas friction forces is accounted for by the velocity coefficient $\varphi$:

$$\varphi = 1/(1+\zeta)^{\frac{1}{2}} \qquad (6)$$

wherein $\zeta$ is the resistance coefficient.

Taking into account jet compression and frictional force, the gas flow rate at the outflow can be determined using the expression:

$$Q = \varphi \varepsilon f \, (2gP/\gamma)^{\frac{1}{2}}$$

or,

$$Q = \mu f \, (2gP/\gamma)^{\frac{1}{2}} \qquad (7)$$

wherein $\mu = \varepsilon \varphi$ is the flow rate coefficient. In the majority of cases of air outflow from circular orifices, one may assume that $\mu = 0.62/0.63$.

Equation (7) can thus be represented as follows:

$$V = \mu (2gP/\gamma)^{\frac{1}{2}} \qquad (8)$$

Equation (8) establishes the relationship between the outflow rate and the pressure.

According to the Bernoulli equation, in the regions of gas jet outflow, a plurality of reduced-pressure zones is created. Gas moves from the higher-pressure zones into intermediate zones (with reduced pressure). An intense, circulatory motion of gaseous flow is established, into which the particulate material is swept up. The high-speed and intense motion of the particles prevents them from aggregating with one another, a problem encountered often in conventional fluid beds. The intense movement of the particles raises heat and mass transfer coefficients.

The HDAL method may be employed using a processing chamber having a gas-distributing grid. The HDAL method is applicable for a wide range of linear and cross-sectional gas flow rates and solid phase polydispersity, and provides high homogeneity over all sections of the chamber. Preferably, the number of gas nozzles varies between comprises 370 - 3200 nozzles per square meter having diameters in the range of 0.7 to 3.5 mm in the side facing the processing chamber. Other appropriate nozzle number and nozzle sizes are possible as well.

Preferably, the gas jet outflow is at least 20 m/s up to 350 m/s. Alternatively, the gas jet outflow speed is at least 100 m/s. The respective gas pressure required to produce such flows varies between 0.05 to 3.0 Bars. The distinct pressure variations (and consequent velocity variations) produced inside the chamber causes an intense circulatory pattern of gas motion, and thus enabling the fluidized layer to be highly stable and to raise heat transfer coefficient of the particulate material.

The temperature of the gas at the nozzles is calculated with a consideration of the decrease in temperature that occurs at outflow from the nozzles (this can be between 1°C to 4°C).

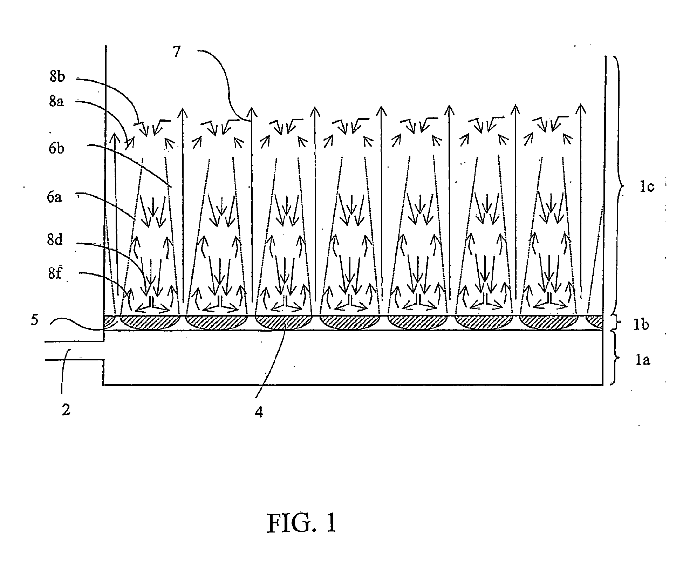

Reference is made now to Figure 1 presenting a lateral cross section of the fluid bed processor according to the present invention. The said device is preferably comprising three main compartments: an inlet chamber (1a); a barrier member (1b) and a processing chamber (1c). A feed stream of compressed gases is forced to intrude the inlet chamber *via* opening (2). The said gases enter then the barrier member (1b) made of the block member (4). Said barrier member is a nozzle grid comprises a plurality of nozzles having a free passageway (see 5 for example), each of which is having a predetermined groove cut shape. The diameter of each nozzle at the inlet rim, is wider then the diameter at the rim adjacent to the processing chamber. Said special groove cut shape of the said nozzle is providing the above-defmed differences in gas pressure along the two sides of the barrier member and thus enables the desired circulated jet characteristics to said processing gases in the processing chamber.

High-velocity gas jets (7) are extruded from each nozzle (5), producing reduced pressure zones at regions of the chamber immediately above the nozzles. Those zones are located between the line (6a) and (6b) in between two adjacent nozzles. Gas stream (such as 8a) flowing from the space between the reduced-pressure zones is having gradually upward course. Due to the above referred predetermined equilibrium between parameters of the upward course flow and parameters characterizing the said reduced-pressure zone, said stream (8a) is forced to alter its flow course and to enter said reduced pressure zone, see for example stream 8b, flowing with downward course.

Inside of each of reduced-pressure zone, two main streams are provided. In the inner core of said zone, a stream having gradually downward course (8d) is flowing towards the block member (4) of the barrier, whereat said stream is about to turbulent. Then, along the outer shell of said reduced-pressure zone, a stream having an upward course (8f) is flowing.

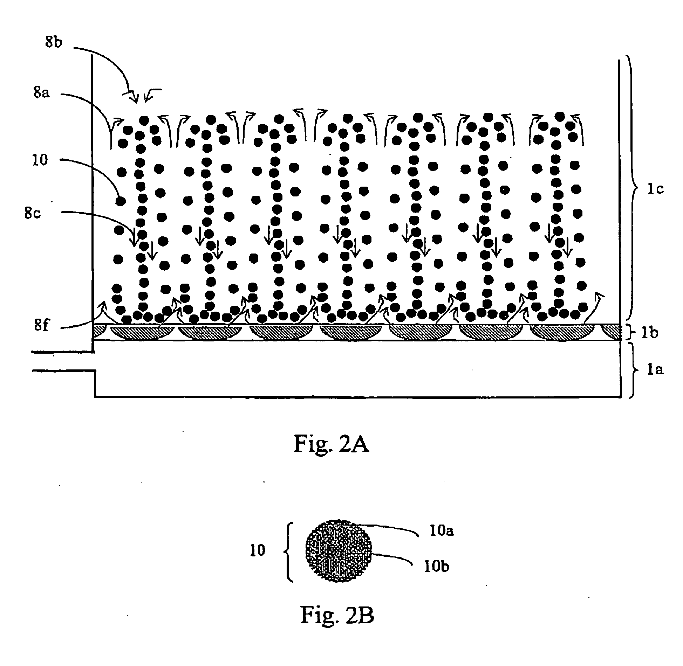

Reference is made now to one preferred embodiment as described in Figure 2. Fig. 2 is thus presenting a lateral cross section of the fluid bed processor according to one embodiment the present invention. As described in Fig. 2B, the particle (10) presented in Fig. 2 is generally having two distinctive layers. The external layer is made of the particulate material to be processed (10a) and an inner layer, which is the granule (10b) to be reversibly coated by adhesive materials. At the time the said material is wet, its adhesive characteristic enable its attachment to the said granules so said granule is coated by said wet material. After respectively short time, due to enhanced mass and heat transfer coefficient of the described system, water is exit the coated material and thus the said material is loosing its adhesive characteristics, until it is finally exit the granule support and leave the processing chamber. Hence, said uncoated granules regenerated to be covered by fresh and wet material to be processed.

Said fluid bed processor comprising the aforementioned-coated granules is especially useful for processing adhesive materials, and particularly materials that are sticky when they are wet, and non-adhesive characteristics at the time the said material is respectively dried. Pastas or many other flavor materials are examples for such a material.

The particulate material is swept up into the gas flow (so as to become "fluidized") along stream (8f), and travels at extremely high velocities downwards in a along the courses of streams (8a), (8b) and (8c). The chaotic collision of said particles, together with the hydrodynamic resistance of the medium, prevents escape of particles from the processing chamber (1c).

In conventional fluid beds, equilibrium is required between the lifting capacity of the ascending gas flow and the particle material weight in order to create a fluidized state. The gas velocity that allows for equilibrium is the hovering velocity of the particle. The hovering velocity is dependant on the mass, density, and shape of the particles being fluidized, as well as the density and viscosity of the gas. When the gas flow is below the hovering velocity, particles precipitate out of the fluidized layer and onto the bottom of the apparatus. In addition, if the hovering velocity is exceeded, particles escape from the processing chamber. Thus, the fluid bed is only stable within a certain critical range of velocities. The problem is aggravated by non-uniform particle sizes, densities, and shapes (this is the case with most in most particulate materials, which need treatment, in which the material is polydispersed).

Regarding the drawbacks of the sate of the art, the novel processor defined in the present invention is characterized with a HDAL having a high, constant flow rate of low pressure. The two flows streams (8f) and (8d) are having different relative pressures and relative velocities. Those streams of contrary courses create an intense, turbulent circulatory motion that causes the particulate material to be immediately picked up into the gas flow and to remain in the fluidized state inside the processing chamber (1c).

Thus, in the novel HDAL processor defined above, equilibrium between the weight of the particles and the ascending gas flow is not required because of the intense circulatory motion (and varying pressure regions) caused by the gas flow. The fluidized state can be achieved over a much larger range of velocities (in fact, the overall ascending gas flow is below the hovering velocity of the particulate material), without the escape of particles from the HDAL and with the ability to treat highly poly-disperse materials.

Very high relative interphase velocities are achieved using HDAL, thus sharply increasing heat and mass transfer coefficients. The HDAL can be adapted to result with a mechanical "tear-away" effect in which moisture on the surface of particles is removed due to the high relative speeds of the interacting phases. The tear-away effect, in contrast to diffusion moisture removal occurring in traditional fluid beds, makes the drying process much more energy efficient and less time-consuming. The removal of bonded water using traditional fluid beds required prolonged contact of the heat carrier with the disperse phase.

Moreover, HDAL is adapted to provide a much lower time and energy expenditure due to the tear-away effect. The tear-away effect also HDAL ideal for use in applications such as aerosol production, mixing of two or more immiscible fluids for producing highly-stable emulsions, crystallization of uniform powders from solutions, removing dusts from gases, trapping admixtures, etc.

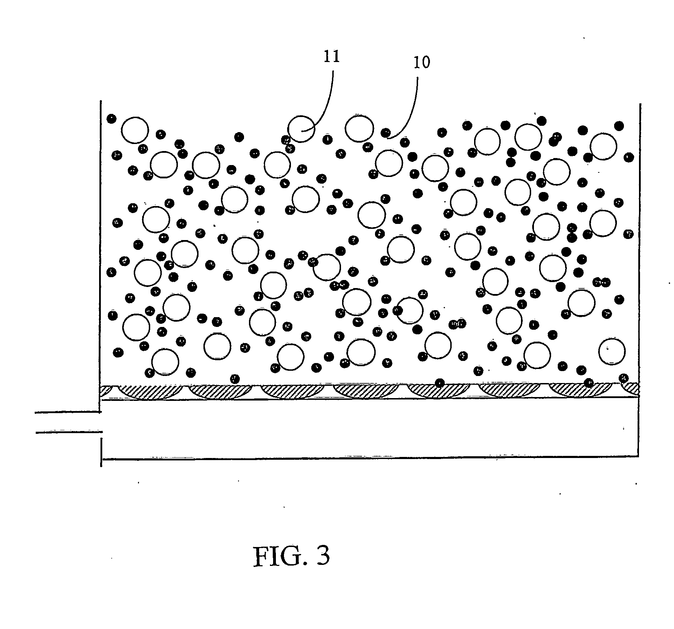

Reference is made now to Figure 3 presenting a lateral cross section of the fluid bed processor according to another embodiment of the present invention. In this type of HDAL, particle (10) to be processed is in heterogeneous mixture with particle (11). Particle (11) is a highly loose inert material with a grain size of significant difference, comparing processed particle (10). According to another embodiment of the present invention, which shall hereto describe as an example to illustrate one possible characteristic; said inert particle (11) is a polymeric granule of 2 to 4 mm diameter. The inert particle (11) is placed into at least the initial portion of working zone of the HDAL. Humid materials to be treated are introduced into forementioned portion of the working zone and evenly distribute to form a maximum area of a contact interface Therefore, the material to be dried (10) is rapidly dehydrated, usually within a few seconds. The dehydration process may be performed in various ways, depending on the physco-chemical characteristics, the magnitude of initial hydration and the required final humidity of the material.

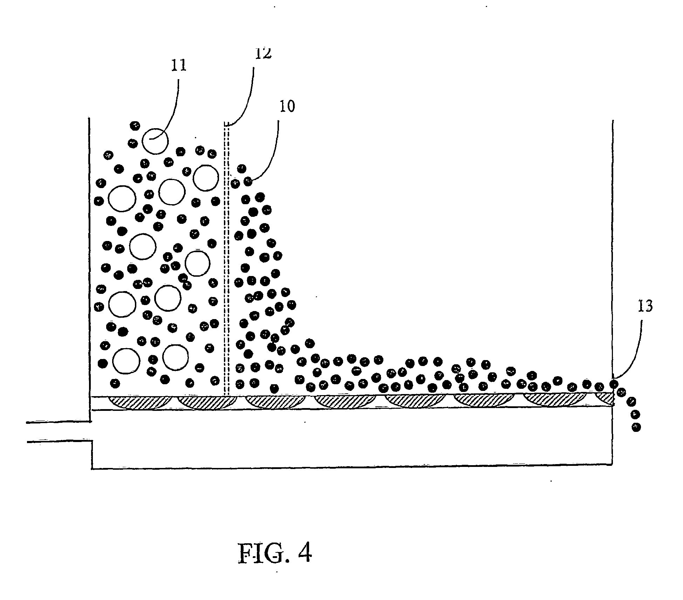

Reference is thus now made to Fig. 4, presenting schematically a cross section of another embodiment of the HDAL, comprising a distinctive section comprising a net, mesh, grill, lattice or any selective barrier, denoted hereafter in the term 'net' (12). The net (12) is dividing the working space into two compartments: an initial working zone (the portion located left to the net (12) and a final processing portion (right to the net 12). On the left, both inert particle (11) and materials to be process (10) are to be treated. Respectively dried particles (10) are penetrating throughout the net (12) to be finally treated as a homogeneous mixture on the right compartment. Optionally, a purge outlet (13) is located at the right side of the said comportment providing for a continuous process.

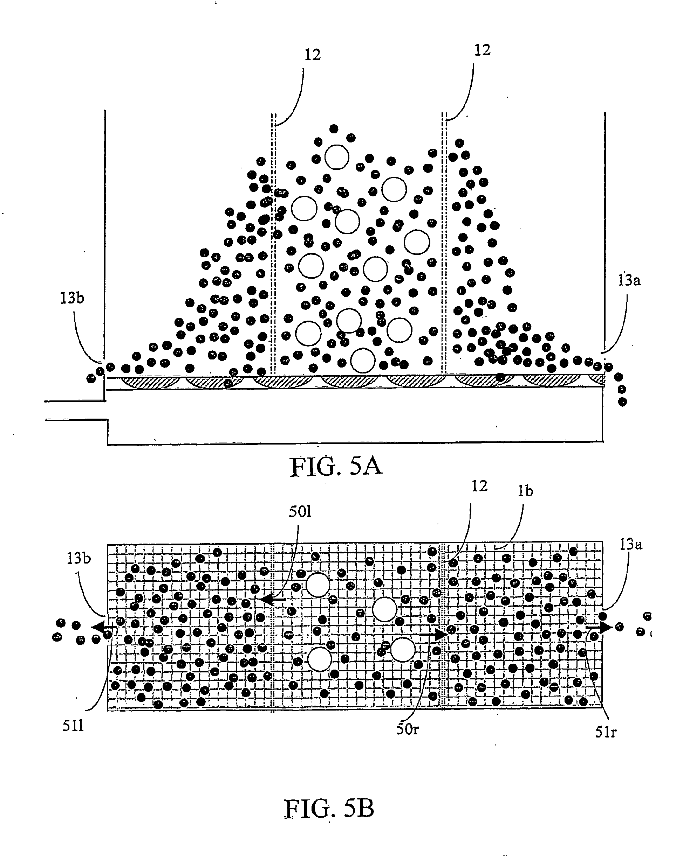

Reference is mate now to figure 5A, presenting somewhat similar embodiment of the HDAL, wherein the initial working zone is now the central portion located inside the nets (12). Here again, both inert particle (11) and material to be process (10) are to be treated. Respectively dried particles (10) are penetrating throughout the net (12) to be finally treated. Optionally, a plurality of purge outlets (here presented outlets 13a and 13b) are located at the edge of the final processing compartment, providing for a continuous process.

Reference is made now to figure 5B, showing the top view of the HDAL as described in Fig. 5A above. Said rectangle vessel comprises nets (1.2) wherein between both inert particle (11) and material to be process (10) are to be treated. Hot air is directed upwards both inert particle (11) and material to be process (10) is to be treated *via* a network of nozzles (1b). Respectively dry matter is escaping throughout the net in a right direction (50r) and left direction (501)- Dry matter is leaving the vessel *via* a plurality of outlets, such as left (511) and right (51r) outlets.

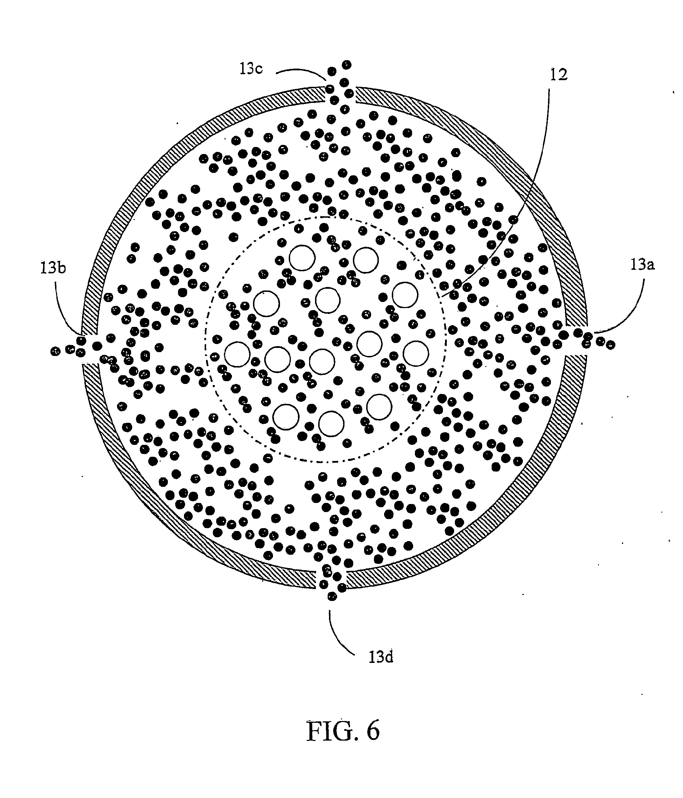

Figure 6 is schematically presenting a cross section of a rounded HDAL vessel from a top view. A gradually circular net (12) is located in a predetermined location along the circumference of the HDAL, wherein four purge outlets (13a-d) are equally located in the apparatus rim.

It is acknowledged in this respect that HDAL as characterized in figure 5 and 6 was constructed. The initial working zone comprises some 61 nozzles, 2.0 mm diameter each, and the final processing portion comprises of 108 nozzles, 12 mm diameter each. At least three materials were treated:

(i) Potassium nitrate having the formula $KNO_3$, of initial humidity of 7 to 10% was processed in said HDAL. The final humidity obtained was lower 0.1%.
(ii) SR-245 having the formula $C_{21}H_6Br_9N_3O_3$, of initial humidity of 15 to 17% was processed in said HDAL. The final humidity obtained was lower 0.5%.
(iii) Halobrom, Bromochloro-5,5-Dimethylhydantion and/or its commercial derivatives such as the one having the formula $C_5H_6BrClN_2O_2$, of initial humidity of 15 to 18% was processed in said HDAL. The final humidity obtained was lower 0.5%.

Those remarkable results emphasize the usefulness and effectively of the HDAL and the HDAL based process.

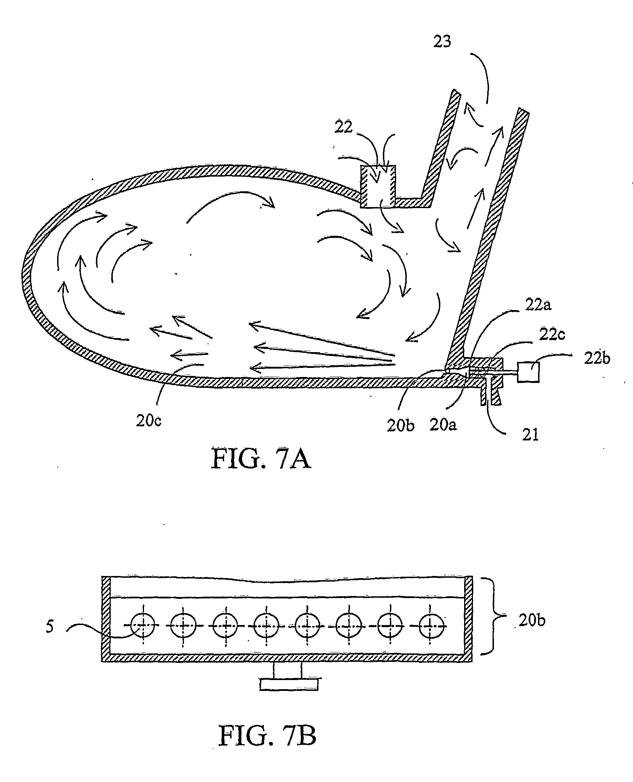

Reference is made now to figure 7A, presenting a lateral cross section to fluidized bed processor, especially adapted to a continuous operation. Said embodiment of the processor comprises of the inlet camber (20a), a nozzle grid (20b) and a processing chamber (20c). Process gas are intrude the said processor *via* opening 21, and passes the valve 22a which enables the user to regulate the inflow of said gas by means of an handle (22b) having axle and lever and spring (22c). The said inlet chamber is having, According one preferred embodiment of the present invention, a groove cut shape which substantially similar to the one presented above in the groove (5) of Figure 1. Figure 7B presents a cross section of magnified nozzle grid (20b), comprising a plurality of nozzles, as such as (5).

The process gas is circularly flow along the curved inner walls of the said processing chamber, wherein fresh material to be processed is been introduced *via* opening (22), and wherein dry processed material is leaving the process chamber *via* opening (23). It is acknowledged that the above mentioned granules are suitable for use also in said continuous processor.

The fluidized bed processor according to the present invention is especially useful for processing particulate materials. Said material is selected, yet not limited to foodstuffs and dairy products, such as additives, health food extracts, soup mixes, baby foods, carbohydrate processing, coffee, and dairy products. In particularly, said processor is useful for pastas and other products made of flour and amino acid containing materials. The fluidized bed processor is also adapted to process chemicals, such as fertilizers, inorganic salts, organic chemicals, pesticides, polymers, ceramics, detergents, paints; and pharmaceuticals, selected for example from proteins, vitamins, yeast, antibiotics, and drugs,

The fluidized bed processor is adapted for various applications, selected, but not limited to drying, processing, reacting, coating, fractionating, separating or milling particulate materials defined above.

## Claims

1. A fluid bed processor device especially useful for processing particulate material, at a reactively high mass and heat exchange efficiency comprising;

   a. an inlet chamber, having an opening in which process gas is forced to intrude at a predetermined velocity;
   b. a processing chamber accommodating the particulate material to be processed;
   c. a nozzle grid located in the base of the processing chamber and forming a barrier between the inlet chamber and the processing chamber, and comprising a plurality of nozzles, each having a free passageway through which said process gas stream is forced to flow from the inlet chamber to the processing chamber as a jet having an outflow velocity into said process chamber in a velocity range of 20 m/s to 350 m/s, such that a steady circulatory motion of particulate material is swept by circulatory gaseous flow set up between zones of relatively higher pressure formed by said jets and reduced pressure zones formed between adjacent said jets, and such that a hydro dynamically active layer (HDAL) is formed in said processing chamber.

2. The fluidized bed processor according to claim 1, wherein the HDAL provides intense circulatory motion caused by the gas flow in a relatively large range of velocities, so the overall ascending gas flow is below the hovering velocity of the said particulate material, without the escape of said particles from the HDAL and with the ability to treat highly polydisperse materials.

3. The fluid bed processor according to claim 1, adapted to process pastas and any other adhesive materials, **characterized by** a processing chamber having inert granules of an average circumference diameter wider then the particles of said material to be processed, whereas wet material is coating each of said granules so only dried and processed material is able to leave the processing chamber and whereas said granules are recycled so they are not leaving the processing chamber.

4. The fluid bed processor according to claim 3, wherein said granules are organic compositions, inorganic materials or any mixture thereof.

5. The fluid bed processor according to claim 1, wherein the nozzle grid, comprises 370 to 3200 nozzles per square meter.

6. The fluid bed processor according to claim 5, wherein organic material is a polymer.

7. The fluid bed processor according to claim 1, wherein each nozzle has a groove cut having diameter in the range of 0.7 to 3.5 mm in the side facing the processing chambers.

8. The fluid bed processor according to claim 1, wherein the gas jet outflow velocity at each nozzle is varies from 20 m/s to sonic and transonic speeds.

9. The fluid bed processor according to claim 1, wherein particles to be processed is in heterogeneous mixture with inert particles in the processing chamber.

10. The fluid bed processor according to claim 9, wherein the inert particles are polymeric granules of 2 to 4 mm external diameter.

11. The fluid bed processor according to claim 1, comprising at least one net, having means to separate between inert particles and particles to be processed.

12. The fluid bed processor according to claim 11, wherein respectively humid particles to be processed are in heterogeneous mixture with inert particles.

13. The fluid bed processor according to claim 11, wherein the ratio between the external diameter of the humid particles to be processed and the external diameter of the inert particles is in the range of 1000:1 1 to 1:1000.

14. The fluid bed processor according to claim 11, additionally comprising at least one outlet orifice, adapted to allow processed material to efflux from the processor, so a continuous or semi-continuous process is obtained.

15. A method for processing a particulate material by the fluidized bed processor as defined in claim 1 or in any of the preceding claims, comprising; introducing said particulate material into a processing chamber having a barrier member in its base comprising a plurality of nozzles and passing a high-speed jet gas through the plurality of nozzles located in the base of said processing chamber, thereby producing distinct regions of low pressure between each two adjacent nozzles so as to create a plurality of an intense, substantially circulatory patterns of gas circulation into which said particulate material is picked up.

16. The method according to claim 15, useful for processing a particulate material in a heterogeneous mixture by the fluidized bed processor, additionally comprising the step of processing the said particulate material with inert material.

17. The method according to claim 16, additionally comprising the step of passing the particulate material to be processed throughout a net, so the inert material is not passing said net.

18. The method according to claim 16, additionally comprising the step of purging the particulate material after it was processed throughout at least one outlet orifice.

19. A method according to claim 15, useful for use in drying a particulate material.

20. A method according to claim 15, useful for use in mixing at least two immiscible materials.

21. A method according to claim 15, useful for use in producing an aerosol.

22. A method according to claim 15, useful for coating a particulate material.

23. A method according to claim 15, wherein the particulate material contains at least one amino acid.

24. A fluid bed processor device according to claim 1, further comprising a plurality of granules in the processing chamber to be reversibly coated by pasta type or sticky material during its drying process.

25. A fluid bed processor device according to claim 1, further comprising at least one net or other selective barrier dividing the processing chamber into an initial working zone and a final processing zone, and further comprising in the initial working zone a plurality of granules to be reversibly coated by pasta type or sticky material during its drying process, wherein respectively dried material can pass the net or the selective barrier for a final treatment at the final processing zone.

26. A method for processing a particulate material according to claim 15, further comprising providing a plurality of granules in the processing chamber to be reversibly coated by paste type or sticky material during its drying process.

27. A method for processing a particulate material according to claim 15, further comprising providing a plurality of granules in an initial working zone of the processing chamber to be reversibly coated by pasta type or sticky material during its drying process, and further comprising final treatment of partially dried material in a final processing zone of the processing chamber divided from the initial processing zone by a net or other selective barrier.

**Patentansprüche**

1. Wirbelbettprozessor speziell zur Verarbeitung von partikulärem Material, mit einer reaktiv hohen Massen- und Wärmeübertragungseffizienz, umfassend:

    a. eine Einlasskammer mit einer Öffnung, in die Prozessgas mit einer vorab festgelegten Geschwindigkeit eindringen gelassen wird;
    b. eine Prozesskammer zur Aufnahme des zu verarbeitenden partikulären Materials;
    c. einen Düsenrost, der sich in der Basis der Prozesskammer befindet und eine Sperre zwischen der Einlasskammer und der Prozesskammer bildet und eine Vielzahl von Düsen umfasst, wobei jede einen freien Durchgang aufweist, durch den besagter Prozessgasstrom zum Strömen aus der Einlasskammer zur Prozesskammer als ein Strahl mit einer Ausströmgeschwindigkeit in besagte Prozesskammer in einem Geschwindigkeitsbereich von 20 m/s bis 305 m/s gezwungen wird, so dass eine stetige Zirkulierbewegung von partikulärem Material durch Zirkuliergasströmungsaufbau zwischen Zonen mit relativ höherem Druck, die von besagtem Strahl gebildet werden, und Zonen mit reduziertem Druck, die zwischen benachbarten besagten Strahlen gebildet werden, durchlaufen wird und dass eine hydrodynamische aktive Schicht (HDAL (Hydro Dynamically Active Layer)) in besagter Prozesskammer gebildet wird.

2. Wirbelbettprozessor nach Anspruch 1, **dadurch gekennzeichnet, dass** die HDAL intensive Zirkulierbewegung, die durch die Gasströmung verursacht wird, in einem relativ großen Geschwindigkeitsbereich liefert, so dass die gesamte aufsteigende Gasströmung unterhalb der Schwebegeschwindigkeit des partikulären Materials, ohne den Austritt von genannten Partikeln aus der HDAL und mit der Fähigkeit zum Behandeln von hochpolydispersen Materialien, liegt.

3. Wirbelbettprozessor nach Anspruch 1, zur Verarbeitung von Pastas und anderer adhesiver Materialien, **gekennzeichnet durch** eine Prozesskammer mit inerten Körnchen mit einem mittleren Umfangsdurchmesser, der größer als die Partikeln aus besagtem zu verarbeitendem Material ist, wobei nasses Material jedes von genannten Körnchen beschichtet, so dass nur getrocknetes und verarbeitetes Material die Prozesskammer verlassen kann, und wobei genannte Körnchen recycelt werden, so dass sie die Prozesskammer nicht verlassen.

4. Wirbelbettprozessor nach Anspruch 3, **dadurch gekennzeichnet, dass** besagte Körnchen organische Zusammensetzungen, anorganische Materialien oder irgendeine Mischung derselben sind.

5. Wirbelbettprozessor nach Anspruch 1, **dadurch gekennzeichnet, dass** der Düsenrost 370 bis 3200 Düsen pro Quadratmeter aufweist.

6. Wirbelbettprozessor nach Anspruch 5, **dadurch gekennzeichnet, dass** organisches Material ein Polymer ist.

7. Wirbelbettprozessor nach Anspruch 1, **dadurch gekennzeichnet, dass** jede Düse einen Nutenschnitt mit Durchmesser im Bereich von 0,7 bis 3,5 mm in der den Prozesskammern zugewandten Seite aufweist.

8. Wirbelbettprozessor nach Anspruch 1, **dadurch gekennzeichnet, dass** die Gasstrahlausströmgeschwindigkeit an jeder Düse von 20 m/s bis Schall- und Transonikgeschwindigkeiten variiert wird.

9. Wirbelbettprozessor nach Anspruch 1, **dadurch gekennzeichnet, dass** die zu verarbeitenden Partikeln in heterogener Mischung mit inerten Partikeln in der Prozesskammer vorliegen.

10. Wirbelbettprozessor nach Anspruch 9, **dadurch gekennzeichnet, dass** die inerten Partikeln polymere Körnchen mit einem Außendurchmesser von 2 bis 4 mm sind.

11. Wirbelbettprozessor nach Anspruch 1, umfassend mindestens ein Netz mit Mitteln zum Trennen zwischen inerten Partikeln und zu verarbeitenden Partikeln.

12. Wirbelbettprozessor nach Anspruch 11, **dadurch gekennzeichnet, dass** jeweils feuchte zu verarbeitende Partikel in heterogener Mischung mit inerten Partikeln vorliegen.

13. Wirbelbettprozessor nach Anspruch 11, **dadurch gekennzeichnet, dass** das Verhältnis zwischen dem Außendurchmesser der feuchten zu verarbeitenden Partikeln und dem Außendurchmesser der inerten Partikeln im Bereich von 1000:1 1 bis 1:1000 liegt.

14. Wirbelbettprozessor nach Anspruch 11, zusätzlich umfassend mindestens eine Auslassöffnung, die gestaltet ist, um verarbeitetes Material aus dem Prozessor herausfließen zu lassen, so dass ein kontinuierlicher oder halbkontinuierlicher Prozess erhalten wird.

15. Verfahren zur Verarbeitung eines partikulären Materials durch den Wirbelbettprozessor nach Anspruch 1 oder nach irgendeinem der vorangehenden Ansprüche, umfassend:

Einleiten von besagtem partikulärem Material in eine Prozesskammer mit einem Sperrelement in ihrer Basis, das eine Vielzahl von Düsen aufweist und einen Hochgeschwindigkeitsgasstrahl durch die Vielzahl von Düsen lässt, die sich in der Basis von besagter Prozesskammer befinden, wodurch unterschiedliche Gebiete mit niedrigem Druck zwischen jeder von zwei benachbarten Düsen erzeugt werden, um eine Vielzahl von intensiven, im wesentlichen kreislaufförmigen Mustern von Gaszirkulation zu erschaffen, in die genanntes partikuläres Material mitgenommen wird.

16. Verfahren nach Anspruch 15, zur Verarbeitung eines partikulären Materials in einer heterogenen Mischung durch den Wirbelbettprozessor, zusätzlich umfassend den Schritt des Verarbeitens des partikulären Materials mit inertem Material.

17. Verfahren nach Anspruch 16, zusätzlich umfassend den Schritt des Durchlassens des partikulären zu verarbeitenden Materials durch ein Netz, so dass das inerte Material nicht durch genanntes Netz tritt.

18. Verfahren nach Anspruch 16, zusätzlich umfassend den Schritt des Entleerens des partikulären Materials nach Verarbeitung durch mindestens eine Auslassöffnung.

19. Verfahren nach Anspruch 15, zur Verwendung beim Trocknen eines partikulären Materials.

20. Verfahren nach Anspruch 15, zur Verwendung beim Mischen von wenigstens zwei unmischbaren Materialien.

21. Verfahren nach Anspruch 15, zur Verwendung beim Erzeugen eines Aerosols.

22. Verfahren nach Anspruch 15, zur Beschichtung eines partikulären Materials.

23. Verfahren nach Anspruch 15, **dadurch gekennzeichnet, dass** das partikuläre Material mindestens eine Aminosäure enthält.

24. Wirbelbettprozessor nach Anspruch 1, ferner umfassend eine Vielzahl von Körnchen in der Prozesskammer zur reversiblen Beschichtung durch Pasta-artiges oder klebriges Material während seines Trocknungsprozesses.

25. Wirbelbettprozessor nach Anspruch 1, ferner umfassend mindestens ein Netz oder eine andere selektive Sperre, das/die die Prozesskammer in eine Anfangsarbeitszone und eine Schlussbehandlungszone unterteilt, und ferner umfassend in der Anfangsarbeitszone eine Vielzahl von Körnchen, die durch Pasta-artiges oder klebriges Material während seines Trocknungsprozesses reversibel beschichtbar sind, wobei jeweiliges getrocknetes Material das Netz oder die selektive Sperre für eine Schlussbehandlung in der Schlussbehandlungszone passieren kann.

26. Verfahren zur Verarbeitung eines partikulären Materials nach Anspruch 15, ferner umfassend Bereitstellen einer Vielzahl von Körnchen in der Prozesskammer zur reversiblen Beschichtung durch Pasta-artiges oder klebriges Material während seines Trocknungsprozesses.

27. Verfahren zur Verarbeitung eines partikulären Materials nach Anspruch 15, ferner umfassend Bereitstellen einer Vielzahl von Körnchen in einer Anfangsarbeitszone der Prozesskammer zur reversiblen Beschichtung durch Pastaartiges oder klebriges Material während seines Trocknungsprozesses, und ferner umfassend Schlussbehandlung von teilweise getrocknetem Material in einer Schlussbehandlungszone der Prozesskammer, die von der Anfangsbehandlungszone durch ein Netz oder eine andere selektive Sperre abgetrennt ist.

**Revendications**

1. Dispositif de traitement sur lit fluidisé utile en particulier pour traiter un matériau particulaire, à une masse élevée de manière réactive et un bon rendement d'échange de chaleur comprenant :

   a. une chambre d'entrée, ayant une ouverture dans laquelle un gaz de transformation est amené à pénétrer de force à une vitesse prédéterminée ;
   b. une chambre de traitement recevant le matériau particulaire à traiter ;
   c. un maillage de buses disposé dans la base de la chambre de traitement et formant une barrière entre la chambre d'entrée et la chambre de traitement, et comportant une pluralité de buses, chacune ayant un passage libre à travers lequel ledit courant de gaz de transformation est amené à circuler de force à partir de la chambre d'entrée jusqu'à la chambre de traitement sous la forme d'un jet ayant une vitesse d'écoulement dans ladite chambre de traitement comprise dans une plage de vitesse de 20 m/s à 350 m/s, de manière telle qu'un déplacement circulatoire stable de matériau particulaire est balayé par un flux gazeux circulatoire défini entre des zones de pression relativement supérieure formées par lesdits jets et des zones de pression réduite formées entre lesdits jets adjacents et de manière telle qu'une couche active hydrodynamiquement (HDAL) est formée dans ladite chambre de traitement.

2. Dispositif de traitement sur lit fluidisé selon la revendication 1, dans lequel la couche HDAL fournit un déplacement circulatoire intense provoqué par le flux de gaz dans une plage de vitesses relativement grande, de sorte que le flux de gaz ascendant global se situe en dessous de la vitesse stationnaire dudit matériau particulaire, sans que lesdites particules ne s'échappent de la couche HDAL et avec la capacité de traiter des matériaux fortement polydispersés.

3. Dispositif de traitement sur lit fluidisé selon la revendication 1, adapté pour traiter des pâtes ou tout autre matériau adhésif, **caractérisé par** une chambre de traitement comprenant des granulés inertes d'un diamètre circonférentiel moyen plus large que les particules dudit matériau à traiter, alors qu'un matériau humide recouvre chacun desdits granulés afin que seul un matériau séché et traité soit en mesure de quitter la chambre de traitement et alors que lesdits granulés sont recyclés et ne quittent donc pas la chambre de traitement.

4. Dispositif de traitement sur lit fluidisé selon la revendication 3, dans lequel lesdits granulés sont des compositions organiques, des matériaux inorganiques ou tout mélange quelconque de ceux-ci.

5. Dispositif de traitement sur lit fluidisé selon la revendication 1, dans lequel le maillage de buses comporte 370 à 3.200 buses par mètre carré.

6. Dispositif de traitement sur lit fluidisé selon la revendication 5, dans lequel le matériau organique est un polymère.

7. Dispositif de traitement sur lit fluidisé selon la revendication 1, dans lequel chaque buse a la forme d'une cannelure fendue ayant un diamètre compris dans la plage de 0,7 à 3,5 mm située du côté faisant face aux chambres de traitement.

8. Dispositif de traitement sur lit fluidisé selon la revendication 1, dans lequel la vitesse d'écoulement du jet gazeux, au niveau de chaque buse, varie de 20 m/s jusqu'à des vitesses soniques et transsoniques.

9. Dispositif de traitement sur lit fluidisé selon la revendication 1, dans lequel les particules à traiter sr présentent selon un mélange hétérogène avec des particules inertes dans la chambre de traitement.

10. Dispositif de traitement sur lit fluidisé selon la revendication 9, dans lequel les particules inertes sont des granulés polymères de 2 à 4 mm de diamètre extérieur.

11. Dispositif de traitement sur lit fluidisé selon la revendication 1, comprenant au moins un filet comportant des moyens pour effectuer une séparation entre des particules inertes et les particules à traiter.

12. Dispositif de traitement sur lit fluidisé selon la revendication 11, dans lequel des particules respectivement humides à traiter sont contenues dans un mélange hétérogène avec des particules inertes.

13. Dispositif de traitement sur lit fluidisé selon la revendication 11, dans lequel le rapport entre le diamètre extérieur des particules humides à traiter et le diamètre extérieur des particules inertes est compris dans la plage de 1000: 1 à 1:1000.

14. Dispositif de traitement sur lit fluidisé selon la revendication 1, comprenant en outre au moins un orifice de sortie adapté pour permettre à un matériau traité de sortir du dispositif afin qu'un processus continu ou semi-continu soit obtenu.

15. Procédé pour traiter un matériau particulaire au moyen du dispositif de traitement sur lit fluidisé, comme défini dans la revendication 1 ou l'une quelconque des revendications précédentes, comprenant les étapes consistant à : introduire ledit matériau particulaire dans une chambre de traitement ayant un élément de barrière dans sa base comportant une pluralité de buses et faire passer un jet gazeux à haute vitesse à travers la pluralité de buses disposées dans la base de ladite chambre de traitement, de manière à produire des régions distinctes de basse pression entre chaque paire de buses adjacentes afin de créer une pluralité de formations, sensiblement circulatoires, intenses de circulation gazeuse dans lesquelles ledit matériau particulaire est saisi.

16. Procédé selon la revendication 15, utile pour traiter un matériau particulaire dans un mélange hétérogène par l'intermédiaire du dispositif de traitement sur lit fluidisé, comprenant en outre l'étape consistant à traiter ledit matériau particulaire avec un matériau inerte.

17. Procédé selon la revendication 16, comprenant en outre l'étape consistant à faire passer le matériau particulaire à traiter à travers un filet, de sorte que le matériau inerte ne traverse pas ledit filet.

18. Procédé selon la revendication 16, comprenant en outre l'étape consistant à purifier le matériau particulaire après qu'il a été traité à travers au moins un orifice de sortie.

19. Procédé selon la revendication 15, utile en vue d'une utilisation pour sécher un matériau particulaire.

20. Procédé selon la revendication 15, utile en vue d'une utilisation pour mélanger au moins deux matériaux non miscibles.

21. Procédé selon la revendication 15, utile en vue d'une utilisation pour produire un aérosol.

22. Procédé selon la revendication 15, utile en vue d'enrober un matériau particulaire.

23. Procédé selon la revendication 15, dans lequel le matériau particulaire contient au moins un acide aminé.

24. Dispositif de traitement sur lit fluidisé selon la revendication 1, comprenant en outre dans la chambre de traitement une pluralité de granulés à enrober de manière réversible d'un type de pâte ou d'un matériau collant pendant leur processus de séchage.

25. Dispositif de traitement sur lit fluidisé selon la revendication 1, comprenant en outre au moins un filet ou une autre barrière sélective divisant la chambre de traitement en une zone de travail initial et une zone de traitement final, et comprenant en outre dans la zone de travail initial une pluralité de granulés à enrober de manière réversible d'un type de pâte ou d'un matériau collant pendant leur processus de séchage, dans lequel un matériau respectivement séché peut traverser le filet ou la barrière sélective pour un traitement final dans la zone de traitement final.

26. Procédé pour traiter un matériau particulaire selon la revendication 15, comprenant en outre l'étape consistant à introduire dans la chambre de traitement une pluralité de granulés à enrober de manière réversible d'un type de pâte ou d'un matériau collant pendant leur processus de séchage.

27. Procédé pour traiter un matériau particulaire selon la revendication 15, comprenant en outre l'étape consistant à introduire dans une zone de travail initial de la chambre de traitement une pluralité de granulés à enrober de manière réversible d'un type de pâte ou d'un matériau collant pendant leur processus de séchage, et comprenant en outre un traitement final du matériau partiellement séché dans une zone de traitement final de la chambre de traitement constituée sous la forme d'une division de la zone de traitement initial grâce à un filet ou à une autre barrière sélective.

EP 1 513 609 B1

FIG. 1

14

8b

8a

10

8c

8f

1c

1b

1a

Fig. 2A

10 {

10a

10b

Fig. 2B

FIG. 3

FIG. 4

FIG. 5A

FIG. 5B

FIG. 6

23

22

22a

22c

22b

20c

20b   20a

21

FIG. 7A

5

20b

FIG. 7B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4272895 A
- US 6189234 B
- US 4492040 A
- US 5459318 A